# EUROPÄISCHE PATENTANMELDUNG

(11) **EP 2 607 641 A1**
(43) Veröffentlichungstag der Anmeldung: **26.06.2013**
(21) Anmeldenummer: 11009980.1
(22) Anmeldetag: 19.12.2011
(51) Int. Cl.: F01N 3/20, F01N 3/28

(54) **Mischeinrichtung zum Einbringen eines Reduktionsmittels in einen Abgasstrom mit schaufelförmigen Mitteln**

(71) Anmelder: MTU FRIEDRICHSHAFEN GMBH, 88045 Friedrichshafen (DE); ROTH-TECHNIK AUSTRIA Gesellschaft m.b.H., 3193 St. Aegyd/Neuwalde (AT)
(72) Erfinder: Sinzenich, Holger, 88677 Markdorf (DE); Hiestand, Christoph, 88693 Deggenhausertal (DE); Haas, Frank, 77889 Seebach (DE)
(74) Vertreter: Winter, Josef

(57) **Zusammenfassung**

Die Erfindung betrifft Mischvorrichtung (6) zum Einbringen eines Reduktionsmittels in einen Abgasstrom (2) einer Brennkraftmaschine, mit einem Gehäuse (8) mit einer Abgaseinlassöffnung (4) zum Einführen des Abgasstroms (2) und einer Abgasauslassöffnung (34) zum Ausführen des Abgasstroms (2), einem in Strömungsrichtung des Abgasstroms (2) der Abgaseinlassöffnung (4) und der Abgasauslassöffnung zwischengeordneten Außenrohr (8), einer radial zwischen dem Außenrohr (8) und einem von diesem in Axialrichtung gesehen wenigstens teilweise umschlossenen Innenrohr (10) ausgebildete und mit der Abgaseinlassöffnung (4) verbundene Ringkammer (22), in welcher wenigstens ein Teil des Abgasstroms (2) als in Umfangsrichtung gerichtete Umfangsströmung (28) strömt, wenigstens einer Öffnung (25a bis 25d) in dem Innenrohr (10), durch welche wenigstens ein Teil des in die Ringkammer (22) eingeströmten Abgasstroms (2) in das Innere des Innenrohrs (10) einströmen kann, in Bezug zum Innenrohr (10) und zum Außenrohr (8) zusätzliche oder separate Leitmitteln (26a bis 26d) für den Abgasstrom, Einspritzmitteln (24), durch welche Reduktionsmittel in das Innere des Innenrohrs (10) eingespritzt wird.

Die Erfindung sieht vor, dass die Leitmittel wenigstens eine am Außenumfang des Innenrohrs (10) angeordnete und in Bezug auf die Umfangsströmung (28) in der Ringkammer (22) der wenigstens einen Öffnung (25a bis 25d) nachgeordnete Leitschaufel (26a bis 26d) beinhalten, die in die Ringkammer (22) derart hinein ragt, dass sie die Umfangsströmung (28) nach radial innen und in die wenigstens eine Öffnung (25a bis 25d) hinein leitet. Hierdurch wird eine bessere Durchmischung des Reduktionsmittels mit dem Abgasstrom erzielt.

## Beschreibung

### Stand der Technik

Die Erfindung betrifft eine Mischvorrichtung zum Einbringen eines Reduktionsmittels in einen Abgasstrom einer Brennkraftmaschine gemäß dem Oberbegriff von Anspruch 1 sowie eine Abgasnachbehandlungsvorrichtung beinhaltend wenigstens einen SCR-Katalysator, welchem in Strömungsrichtung des Abgasstroms gesehen wenigstens eine solche Mischvorrichtung vorgeordnet ist, gemäß Anspruch 15.

Bei sogenannten SCR-Katalysatoren erfolgt eine selektive katalytische Reduktion von Stickoxiden in einer Abgasströmung zu unschädlichen Stoffen. Reduktionskatalysatoren haben die Aufgabe, die Abgase einer Brennkraftmaschine mittels selektiver katalytischer Reaktion von Stickoxiden zu reinigen, ohne dass hierbei das eingesetzte Reduktionsmittel an die Umwelt abgegeben wird. Der Reduktionskatalysator reduziert mittels eines Reduktionsmittels (meist eine Hamstoff-Wasser-Lösung) unter Anwesenheit von Sauerstoff Stickoxide zu molekularem Stickstoff und Wasser (SCR-Verfahren). Als Quelle des Reduktionsmittels wird in der Regel eine das Reduktionsmittel spendende Substanz wie Harnstoff zugegeben, welcher im Abgas Ammoniak freisetzt. Im Reduktionskatalysator wird dann das Ammoniak mit den Stickoxiden zu molekularem Stickstoff und Wasser reduziert. Hierzu ist in einem Vorratsbehälter eine wässrige Harnstofflösung bevorratet, die Ober eine Zuführleitung einem dem Katalysator vorgeordnetes Abgasrohr zugeleitet wird, um ein Gasgemisch von Abgas und Reduktionsmittel zu erzeugen. Eine solche Abgasnachbehandlungsvorrichtung mittels Reduktionskatalysator ist beispielsweise in der DE 20 2006 020 U1 beschrieben.

Das Gasgemisch aus Abgas und Reduktionsmittel ist nach mindestens teilweiser Umwandlung des Harnstoffs in Ammoniak dem Substrat des SCR-Katalysators mit möglichst hoher Strömungs- und Konzentrationsgleichverteilung zuzuführen, um eine hohe Reduktionsrate bei der Abgasentstickung zu ermöglichen. Insbesondere sind Ablagerungen von Zwischenprodukten an den Oberflächen von strömungsführenden Bauteilen zu vermeiden.

Eine gattungsgemäße Mischvorrichtung ist beispielsweise aus der EP 0 555 746 B1 bekannt. Dort wird die Abgasströmung mittels eines tangential angeordneten Zuströmstutzens in die Ringkammer eingeströmt. Von dort gelangt das Abgas mittels in einer Wandung eines konischen Innenrohres ausgebildeten Öffnungen in das Innere des Innenrohres, in welches axial Reduktionsmittel eingespritzt wird, um dieses mit dem Abgasstrom zu vermischen. An der radial inneren Umfangswand des Innenrohres sind Leitschaufeln bzw. Leitbleche angeordnet, welche in das Innere des Innenrohres hineinragen, um die durch die Öffnungen in der Wandung des Innenrohres ins Innere eintretenden Abgasstrom in Drall zu versetzen. Dadurch soll eine bessere Durchmischung von Reduktionsmittel und Abgas im Inneren des Innenrohres erzielt werden. Problematisch dabei ist einerseits, dass eine definierte Umfangsströmung in der Ringkammer nicht sichergestellt ist. Andererseits entsteht bei der Umlenkung der Abgasströmung von der Umfangsrichtung in der Ringkammer in eine durch die Öffnungen hindurch nach radial innen gerichtete Strömung ein relativ großer Strömungswiderstand, den es zu überwinden gilt. Wegen der ungünstigen Strömungsverhältnisse ist zu erwarten, dass der Durchmischungsgrad des Reduktionsmittels mit dem Abgas nicht allzu hoch ist bzw. unerwünschte Ablagerungen von Abgas- oder Reduktionsmittelbestandteilen an den abgasführenden Wänden zu befürchten sind.

### Aufgabe der Erfindung

Der Erfindung liegt demgegenüber die Aufgabe zugrunde, eine Mischvorrichtung der eingangs erwähnten Art derart weiter zu entwickeln, dass sie aufgrund verbesserter Strömungsverhältnisse eine bessere Durchmischung des Reduktionsmittels mit dem Abgasstrom erlaubt. Ebenso soll eine Abgasnachbehandlungsvorrichtung mit einer solchen Mischvorrichtung zur Verfügung gestellt werden.

Diese Aufgabe wird erfindungsgemäß durch die Merkmale von Anspruch 1 und Anspruch 15 gelöst.

### Offenbarung der Erfindung

Die Erfindung sieht vor, dass bei der Mischvorrichtung die Leitmittel wenigstens eine am Außenumfang des Innenrohres angeordnete und in Bezug auf die Umfangsströmung des Abgasstroms in der Ringkammer der wenigstens einen Öffnung nachgeordnete Leitschaufel beinhalten, die in die Ringkammer derart hinein ragt, dass sie die Umfangsströmung nach radial innen und in die Öffnung hinein leitet.

Durch die in die Ringkammer ragende(n) Leitschaufel(n) wird eine Strömungsumlenkung von der Umfangsrichtung in die Öffnung(en) in der Wandung des Innenrohrs hinein und damit in radiale Richtung erzielt, wodurch sich eine nach radial innen gerichtete Strömung im Inneren des Innenrohrs ausbilden kann. Diese nach radial innen gerichtete Strömung sorgt für eine gute Drallbildung im Inneren des Innenrohres, in welches das Reduktionsmittel axial eingespritzt oder eingedüst wird, was in einer verbesserten Durchmischung des Reduktionsmittels mit dem heißen Abgas resultiert.

Weiterhin sorgt der in der Ringkammer zirkulierende heiße Abgasstrom, dass sich das Innenrohr bzw. dessen Inneres, in welchem die Durchmischung stattfindet, erwärmt. Da sich dann insbesondere die radial innere Umfangsfläche des Innenrohrs erwärmt, kann ein sich auf dieser Fläche abgesetzter Flüssigkeitsfilm aus Harnstofflösung abdampfen. Dies hilft, Ablagerungen aus Zwischenprodukten der Hamstoffzersetzung zu vermeiden.

Durch die in den Unteransprüchen aufgeführten Maßnahmen sind vorteilhafte Weiterbildungen und Verbesserungen der im Patentanspruch 1 angegebenen Erfindung möglich.

Zur Umlenkung der Umfangsströmung in der Ringkammer in eine nach radial innen in die Öffnung hinein gerichtete Strömung des Abgasstroms ist besonders bevorzugt in einer Ebene senkrecht zu einer Mittelachse des Außenrohres oder des Innenrohres gesehen die wenigstens eine Leitschaufeln gegen die Strömungsrichtung der Umfangsströmung geneigt angeordnet. Dies ist beispielsweise dadurch realisiert, dass die wenigstens eine Leitschaufel in einem spitzen Winkel in Bezug zu einer an den Außenumfang des Innenrohres angelegten Tangentialebene angeordnet ist.

Eine besonders einfache und kostengünstige Fertigung ergibt sich, wenn gemäß einer Weiterbildung die wenigstens eine Leitschaufel und das Innenrohr einstückig ausgebildet werden, wobei die Leitschaufel durch einen fahnenartig ausgeschnittenen und in Bezug zum restlichen Innenrohr ausgebogenen Abschnitt der Wandung des Innenrohres gebildet wird.

Vorzugsweise sind am Außenumfang des Innenrohres mehrere jeweils einer Öffnung im Innenrohr zugeordnete Leitschaufeln vorgesehen, wobei in Umfangsströmungsrichtung des Abgasstroms gesehen die Länge der Leitschaufeln zunimmt. Dadurch wird sichergestellt, dass jede Leitschaufel einen definierten, vorzugsweise gleich großen Teil des in der Ringkammer zirkulierenden Abgasstroms erfasst und nach radial innen leitet bzw. dass der Abgasstrom über den Umfang gesehen etwa gleichverteilt in das Innere des Innenrohrs geleitet wird, um dort für eine gute Durchmischung mit dem Reduktionsmittel zu sorgen.

Um die Ausbildung einer rotierenden Umfangsströmung in der Ringkammer zu unterstützen ist vorzugsweise eine der Abgaseinlassöffnung unmittelbar nachgeordnete Leitschaufel vorgesehen, welche mit einer der Abgaseinlassöffnung zugewandten Fläche wenigstens einen Teil des über die Abgaseinlassöffnung in die Ringkammer zugeführten Abgasstroms in die in Umfangsrichtung gerichtete Umfangsströmung leitet. Im Sinne einer vorteilhaften Doppelfunktion kann diese Leitschaufel zugleich ausgebildet sein, dass sie mit ihrer von der Abgaseinlassöffnung abgewandten Fläche wenigstens einen Teil der Umfangsströmung in der Ringkammer in eine ihr zugeordnete Öffnung in der Wandung des Innenrohrs leitet.

Gemäß einer Weiterbildung mündet das Innenrohr in eine bezogen auf den Querschnitt oder Durchmesser des Innenrohres mit einem demgegenüber größeren Querschnitt oder Durchmesser versehene weitere Kammer im Gehäuse. Beim Ausströmen des mit dem Reduktionsmittel vermischten Abgases aus dem Innenrohr in die weitere Kammer mit größerem Querschnitt unterstützt die noch im Innenrohr herrschende Drallströmung die Aufweitung der Strömung in der weiteren Kammer und damit für eine gleich verteilte Anströmung des der weiteren Kammer nachgeordneten SCR-Katalysators.

Gemäß einer weiteren Ausführungsform kann die Ringkammer eine Stirnwandung mit wenigstens einer Öffnung aufweist, durch welche ein Teil des in die Ringkammer eingeströmten Abgasstroms direkt in die weitere Kammer strömt, in welcher dann dieser Teil des Abgasstroms mit dem restlichen, in das Innere des Innenrohres eingeströmten und mit dem Reduktionsmittel versehenen Teil des Abgasstroms vereinigt wird. Dann strömt nur ein Teilabgasstrom des gesamten Abgasstroms in das Innere des Innenrohrs, wodurch sich dort eine reduzierte Strömungsgeschwindigkeit einstellt, was bedingt durch die geringe Geschwindigkeit wiederum für eine bessere Durchmischung des Reduktionsmittels mit dem Abgasstrom sorgt, weil die Verweilzeit für die thermische Zerlegung des Harnstoffs länger ist und damit die Aufbereitung des Harnstoffs zu Ammoniak verbessert ist. Da dann auch ein weiterer Teilabgasstrom durch die Stirnwand der Ringkammer hindurch direkt in die weitere Kammer strömt, ergibt sich insgesamt ein vorteilhaft geringerer Abgasgegendruck. Besonders bevorzugt wird dabei die Stirnwand der Ringkammer durch ein kreisförmiges Lochblech gebildet. Weiterhin kann sich das Innenrohr über die Stirnwand der Ringkammer hinaus bis in die weitere Kammer hinein erstrecken.

Die Abgaseinlassöffnung ist vorzugsweise als ein in das Außenrohr radial einmündender Zuströmstutzen ausgebildet. Alternativ könnte die Abgaseinlassöffnung auch als ein in das Außenrohr axial oder tangential einmündender Zuströmstutzen ausgebildet sein.

Die Erfindung betrifft auch eine Abgasnachbehandlungsvorrichtung beinhaltend wenigstens einen SCR-Katalysator, welchem in Strömungsrichtung des Abgasstroms gesehen wenigstens eine vorangehend beschriebene Mischvorrichtung vorgeordnet ist.

Besonders bevorzugt sind dann ein Substrat des SCR-Katalysators und die Mischvorrichtung in einem gemeinsamen Gehäuse angeordnet, beispielsweise in einem zylindrischen Gehäuse, welches bevorzugt durch das Außenrohr der Mischvorrichtung gebildet wird.

Weiterhin kann dem Substrat des SCR-Katalysators und der Mischvorrichtung ein Zwischenboden mit über dem Querschnitt verteilt angeordneten Öffnungen zwischengeordnet sein. Durch diese Maßnahme wird eine möglichst homogene Anströmung des Substrats des SCR-Katalysators begünstigt.

Die genaue Funktionsweise der Mischvorrichtung bzw. der Abgasnachbehandlungsvorrichtung wird durch die folgende Beschreibung von Ausführungsbeispielen deutlich.

### Zeichnung

Ausführungsbeispiele der Erfindung sind in der Zeichnung dargestellt und in der nachfolgenden Beschreibung näher erläutert. In der Zeichnung zeigt
- Fig.1: eine Längsquerschnittsdarstellung einer Abgasnachbehandlungsvorrichtung mit einer Mischvorrichtung gemäß einer bevorzugten Ausführungsform der Erfindung;
- Fig.2: eine perspektivische Darstellung der Teile der Abgasnachbehandlungsvorrichtung von Fig.1;
- Fig.3: eine perspektivische Darstellung der Teile einer Abgasnachbehandlungsvorrichtung mit einer Mischvorrichtung gemäß einer weiteren Ausführungsform;
- Fig. 4: eine Längsquerschnittsdarstellung Abgasnachbehandlungsvorrichtung mit einer Mischvorrichtung gemäß einer weiteren Ausführungsform der Erfindung;
- Fig.5: eine perspektivische Darstellung der Teile der Abgasnachbehandlungsvorrichtung von Fig.4;
- Fig.6: eine Querschnittsdarstellung durch die Mischvorrichtung von Fig.1.

### Beschreibung der Ausführungsbeispiele

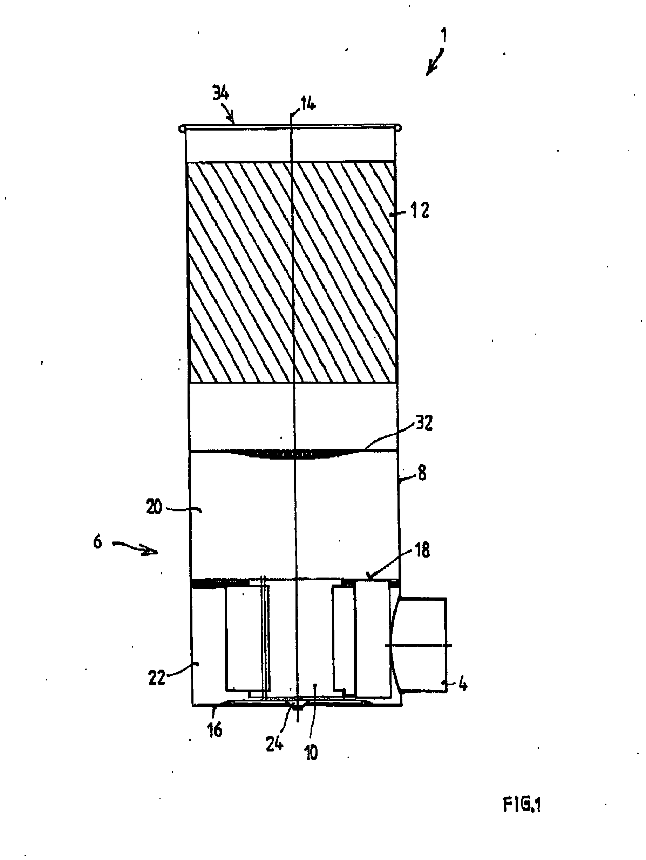

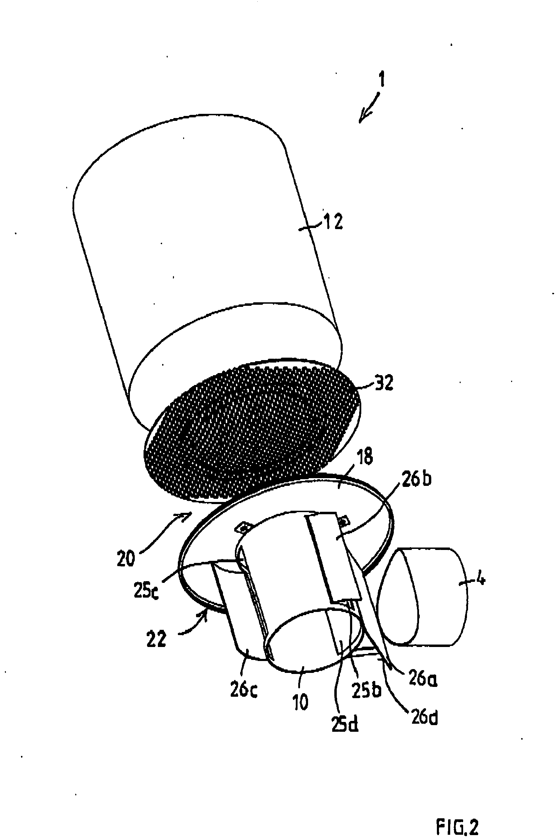

In Fig.1 und Fig.2 ist eine bevorzugte Ausführungsform einer Abgasnachbehandlungsvorrichtung 1 einer Brennkraftmaschine eines Fahrzeugs gezeigt, zum Beispiel einer selbstzündenden Dieselbrennkraftmaschine eines schweren Nutzfahrzeugs. Denkbar ist die Verwendung der Abgasnachbehandlungsvorrichtung 1 jedoch in jeder Art von Fahrzeug, wie bei geländegängigen oder straßengebundenen Fahrzeugen, bei Schiffen und Schienenfahrzeugen sowie auch für stationäre Brennkraftmaschinen.

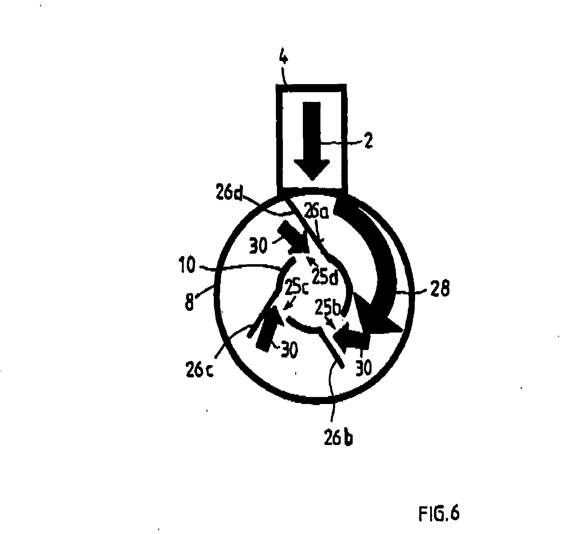

Die Brennkraftmaschine erzeugt einen durch in Fig.6 durch einen Pfeil 2 symbolisierten Abgasstrom 2, welcher nach seiner Erzeugung in eine Abgaseinlassöffnung 4 einer Mischvorrichtung 6 der Abgasnachbehandlungsvorrichtung 1 eingeleitet wird. Die Mischvorrichtung 6 bildet daher einen Teil der Abgasnachbehandlungsvorrichtung 1 und umfasst im Wesentlichen ein in Fig.2 nicht gezeigtes beispielsweise zylindrisches Gehäuse 8, welches bevorzugt durch ein ebenfalls in Fig.2 nicht gezeigtes Außenrohr gebildet wird und welches ein hierzu koaxiales Innenrohr 10 aufnimmt. Alternativ könnte auch ein separates bzw. zusätzliches Gehäuse vorgesehen sein. Das Außenrohr 8 umschließt das Innenrohr 10 der Mischvorrichtung 6 in Umfangsrichtung bevorzugt vollständig und in Axialrichtung zumindest teilweise. In dem Außenrohr bzw. Gehäuse 8 aus ist abströmseitig der Mischvorrichtung 6 ein Substrat 12 eines SCR-Katalysators koaxial aufgenommen ist.

Das Innenrohr 10 ist zwischen zwei senkrecht zur Mittelachse 14 angeordneten Stirnwänden 16, 18 gehalten, wobei es in einer zentralen Öffnung der dem Substrat zugewandten Stirnwand 18 gehalten ist und mit seiner dem Substrat 12 zugewandten endseitigen Öffnung in eine im Inneren des Außenrohres bzw. des Gehäuses 8 ausgebildete Kammer 20 mündet. Mit seinem anderen Ende ist das Innenrohr 10 an der anderen Stirnwand 16 befestigt.

In radialer Richtung gesehen ist zwischen der radial äußeren Umfangsfläche des Innenrohrs 10 und der radial inneren Umfangsfläche des Außenrohrs 8 eine Ringkammer 22 ausgebildet, in welche die Abgaseinlassöffnung 4 mündet, welche hier bevorzugt als ein in das Außenrohr 8 radial einmündender Zuströmstutzen ausgebildet. Alternativ könnte die Abgaseinlassöffnung 4 auch als ein in das Außenrohr 8 axial oder auch tangential einmündender Zuströmstutzen ausgebildet sein.

Im Zentrum des Innenrohrs 10, bevorzugt im Bereich der Mittelachse 14 sind an der vom Substrat 12 abgewandten Stirnwand 16 Einspritzmittel 24 der Mischvorrichtung 6, nämlich eine Einspritzvorrichtung angeordnet, welche Reduktionsmittel, bevorzugt eine Harnstoff-Wasser-Lösung in axialer Richtung, d.h. hier entlang der Mittelachse 14 in das Innere des Innenrohrs 10 in Richtung Kammer 20 einspritzen. Weiterhin weist das Innenrohr 10 bevorzugt mehrere Öffnungen 25b, 25c, 25d auf, durch welche das Innere des Innenrohrs 10 mit der Ringkammer 22 in Verbindung steht. In axialer Richtung gesehen ist daher das Innere des Innenrohrs 10 den Einspritzmitteln 24 und dem Substrat 12 zwischengeordnet.

Der durch die Abgaseinlassöffnung 4 wird der hier beispielsweise radial einströmende Abgasstrom 2 durch Leitmittel 26a, 26b, 26c, 26d der Mischvorrichtung 6 zunächst in eine in der Ringkammer 22 rotierende Umfangsströmung 28 umgeleitet und von dort durch die Öffnungen 25b, 25c, 25d in eine nach radial innen gerichtete Abgasströmung 30, die durch Pfeile in Fig.6 veranschaulicht ist.

Diese Leitmittel umfassen bevorzugt mehrere an der radial äußeren Umfangsfläche des Innenrohrs 10 angeordnete und in Bezug auf die Umfangsströmung 28 des Abgasstroms in der Ringkammer 22 den Öffnungen 25b, 25c, 25d nachgeordnete Leitschaufeln 26a, 26b, 26c, 26d, die in die Ringkammer 22 derart hinein ragen, dass sie die Umfangsströmung 28 in die Öffnungen 25b, 25c, 25d hinein in die nach radial innen gerichtete Abgasströmung 30 leiten. Hierzu sind die Leitschaufeln 26a, 26b, 26c, 26d in einer Ebene senkrecht zur Mittelachse 14 gesehen beispielsweise gegen die Strömungsrichtung der Umfangsströmung 28 in der Ringkammer 22 geneigt angeordnet. Dies ist beispielsweise dadurch realisiert, dass die Leitschaufeln 26a, 26b, 26c, 26d in einem spitzen Winkel in Bezug zu einer an die radial äußere Umfangsfläche des Innenrohrs 10 angelegten Tangentialebene angeordnet sind. Nicht zuletzt können einige oder alle Leitschaufeln 26a, 26b, 26c, 26d in Bezug zur Anströmrichtung der Umfangsströmung 28 konkav gebogen ausgeführt sein, wie Fig.2 zeigt.

Besonders bevorzugt sind die Leitschaufeln 26a, 26b, 26c, 26d und das Innenrohr 10 einstückig ausgeführt, wobei die Leitschaufeln 26a, 26b, 26c, 26d durch fahnenartig ausgeschnittene und in Bezug zum restlichen Innenrohr 10 in die Ringkammer 22 ausgebogene rechteckförmige Abschnitte der Wandung des Innenrohrs 10 gebildet werden. Dadurch werden gleichzeitig auch die den Leitschaufeln 26a, 26b, 26c, 26d zugeordneten rechteckförmigen Öffnungen 25b, 25c, 25d in der Wandung des Innenrohrs 10 erzeugt. Dadurch sind die Leitschaufeln 26a, 26b, 26c, 26d in Strömungsrichtung der Umfangsströmung 28 in der Ringkammer 22 gesehen bevorzugt den zugeordneten Öffnungen 25b, 25c, 25d in der Wandung des Innenrohrs 10 unmittelbar nachgeordnet. Vorzugsweise nimmt in Richtung der Umfangsströmung 28 gesehen die Länge der Leitschaufeln 26a, 26b, 26c, 26d zu, welche dann von der radial äußeren Umfangsfläche des Innenrohrs 10 aus gemessen wird.

Um die Ausbildung der rotierenden Umfangsströmung 28 in der Ringkammer 22 zu unterstützten, ist vorzugsweise eine der Abgaseinlassöffnung 4 in Strömungsrichtung gesehen unmittelbar nachgeordnete Leitschaufel 26a bzw. 26d vorgesehen, welche mit einer der Abgaseinlassöffnung 4 zugewandten Fläche wenigstens einen Teil des über die Abgaseinlassöffnung 4 in die Ringkammer 22 zugeführten Abgasstroms 2 in die in Umfangsrichtung gerichtete Umfangsströmung 28 leitet, wie insbesondere aus Fig.6 hervorgeht. Diese Leitschaufel 26a bzw. 26d erstreckt sich dann bevorzugt von der radial äußeren Umfangsfläche des Innenrohrs 10 bis hin zur Mündung der Abgaseinlassöffnung 4 des Außenrohrs 8. Diese Leitschaufel 26a bzw. 26d bildet daher in Strömungsrichtung gesehen eine "erste Leitschaufel". Sie leitet aber gleichzeitig auch als "letzte Leitschaufel" mit ihrer von der Abgaseinlassöffnung 4 abgewandten Fläche wenigstens einen Teil der Umfangsströmung 28 in der Ringkammer 22 in die ihr zugeordnete "letzte" Öffnung 25d in der Wandung des Innenrohrs 10 ein.

Wie bereits oben beschrieben, mündet das Innenrohr 10 in die bezogen auf den Querschnitt oder Durchmesser des Innenrohrs 10 mit einem demgegenüber größeren Querschnitt oder Durchmesser versehene Kammer 20 im Gehäuse 8. Dem Substrat 12 des SCR-Katalysators und der Mischvorrichtung 6 ist bevorzugt ein Zwischenboden 32 mit über dem Querschnitt verteilt angeordneten Öffnungen zwischengeordnet.

Die Funktionsweise der Abgasnachbehandlungsvorrichtung 1 ist dann wie folgt: Wie in Fig.6 veranschaulicht, wird über die Abgaseinlassöffnung 4 ein Abgasstrom 2 hier beispielsweise radial zugeführt, welcher durch die "erste Leitschaufel" 26a in eine in der Ringkammer 22 rotierende Umfangsströmung 28 umgeleitet wird. Durch Kontakt mit den weiteren Leitschaufeln 26b, 26c und 26d bzw. auch mit der "ersten" und zugleich "letzten" Leitschaufel 26a werden jeweils Teilströme aus der Umfangsströmung 28 nach radial innen in die Öffnungen 25b, 25c 25d hinein und von dort in das Innere des Innenrohrs 10 als nach radial innen gerichtete Abgasströmung 30 geleitet, wo sich eine im Inneren des Innenrohrs 10 rotierende Drallströmung ausbildet. Diese Drallströmung unterstützt die Durchmischung mit dem durch die Einspritzmittel 24 in das Innenrohr 10 eingespritzten Reduktionsmittel.

Sodann strömt der weiterhin rotierende Mischstrom aus dem Inneren des Innenrohrs 10 in die Kammer 20 aus, expandiert dort über den Durchmesser gleichmäßig und geht allmählich in eine axial gerichtete Strömung über, welche den Zwischenboden an-und dessen Öffnungen durchströmt, um das Substrat 12 des SCR-Katalysators zu durchströmen und schließlich durch eine am Ende des Gehäuses bzw. des Außenrohrs 8 angeordnete Abgasauslossöffnung 34 beispielsweise in einen dort angeschlossenen Abgasschalldämpfer einzuströmen.

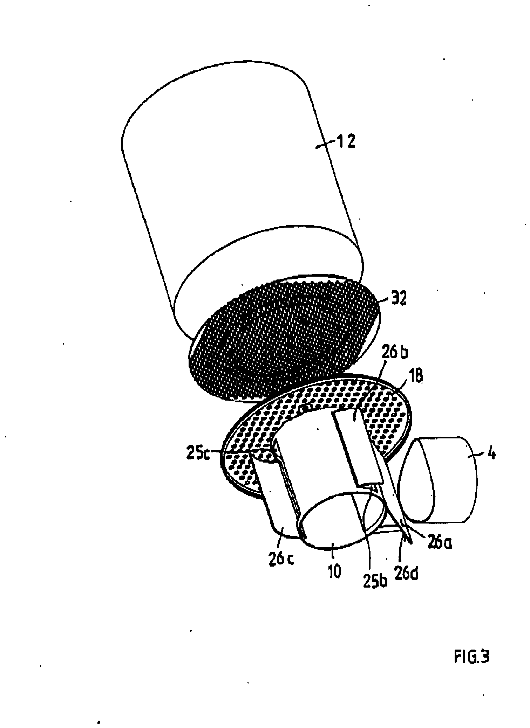

Bei den weiteren, in Fig.3 bzw. Fig.4 und Fig.5 gezeigten Ausführungsformen sind identische und gleich wirkende Bauteile und Baugruppen mit den gleichen Bezugszahlen gekennzeichnet wie beim vorangehenden Ausführungsbeispiel nach Fig1. und Fig.2. Im Unterschied zu dieser weist bei der Ausführungsform von Fig.3 die dem Substrat 12 zugewandte Stirnwandung 18 Öffnungen auf, durch welche ein Teil des in die Ringkammer 22 eingeströmten Abgasstroms von dort direkt und unter Umgehung des Innenrohrs 10 in die Kammer 20 strömt, in welcher dann dieser Teil des Abgasstroms mit dem restlichen, in das Innere des Innenrohrs 10 eingeströmten und mit dem Reduktionsmittel vermischten Teil des Abgasstroms vereinigt wird. Besonders bevorzugt wird dabei die Stirnwand 18 durch ein kreisförmiges Lochblech gebildet. Weiterhin kann sich das Innenrohr 10 auch über die Stirnwand 18 hinaus bis in die Kammer 20 hinein erstrecken.

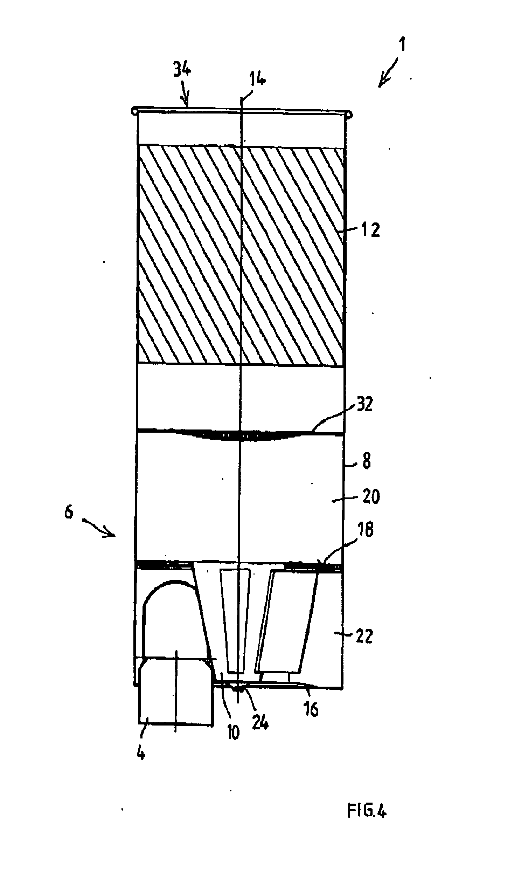

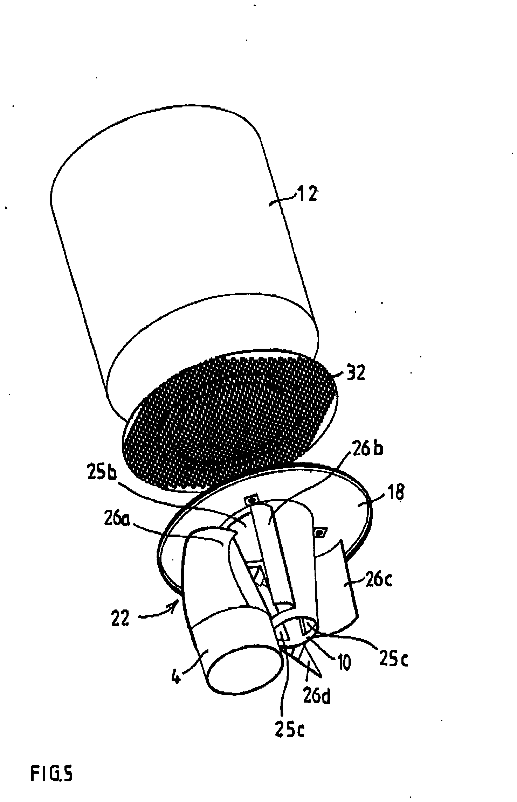

Bei der Ausführungsform von Fig.4 und Fig.5 erfolgt die Zuströmung des Abgasstroms in die Ringkammer 22 über einen in das Außenrohr 8 axial einmündenden und sich bis in die Ringkammer 22 hinein erstreckenden Zuströmstutzen 4. An diesem Zuströmstutzen 4 ist dann zugleich die "erste Leitschaufel" 26a als sich in die Ringkammer 22 erstreckender Abschnitt ausgebildet, wobei dieser Abschnitt eine Aussparung 36 aufweist, welche in Umfangsrichtung der Ringkammer 22 gerichtet ist. Die weiteren Leitschaufeln 26b, 26c, 26d sind hingegen wie bei den vorangehenden Ausführungsbeispielen ausgebildet. Nicht zuletzt ist das innenrohr 10 konisch geformt und weitet sich in Richtung Substrat 12 auf.

Es versteht sich, dass die Erfindung nicht auf die beschriebenen Ausführungsformen beschränkt ist, sondern dass insbesondere beliebige Kombinationen der Merkmale der beschriebenen Ausführungsformen möglich sind, um weitere Ausführungsformen zu bilden.

### Bezugszeichenliste

- 1: Abgasnachbehandlungsvorrichtung
- 2: Abgasstrom
- 4: Abgaseinlassöffnung
- 6: Mischvorrichtung
- 8: Außenrohr
- 10: Innenrohr
- 12: Substrat
- 14: Mittelachse
- 16: Stirnwand
- 18: Stirnwand
- 20: Kammer
- 22: Ringkammer
- 24: Einspritzmittel
- 25: Öffnungen
- 26: Leitschaufeln
- 28: Umfangsströmung
- 30: Abgasströmung
- 32: Zwischenboden
- 34: Abgasauslassöffnung
- 36: Aussparung

## Patentansprüche

1. Mischvorrichtung (6) zum Einbringen eines Reduktionsmittels in einen Abgasstrom (2) einer Brennkraftmaschine, mit
a. einem Gehäuse (8) mit einer Abgaselnlassöffnung (4) zum Einführen des Abgasstroms (2) und einer Abgasauslassöffnung (34) zum Ausführen des Abgasstroms (2),
b. einem in Strömungsrichtung des Abgasstroms (2) der Abgaseinlassöffnung (4) und der Abgasauslassöffnung zwischengeordneten Außenrohr (8),
c. einer radial zwischen dem Außenrohr (8) und einem von diesem In Axialrichtung gesehen wenigstens teilweise umschlossenen Innenrohr (10) ausgebildete und mit der Abgaseinlassöffnung (4) verbundene Ringkammer (22), in welcher wenigstens ein Teil des Abgasstroms (2) als in Umfangsrichtung gerichtete Umfangsströmung (28) strömt,
d. wenigstens einer Öffnung (25a bis 25d) in dem Innenrohr (10), durch welche wenigstens ein Teil des in die Ringkammer (22) eingeströmten Abgasstroms (2) in das Innere des Innenrohrs (10) einströmen kann,
e. in Bezug zum Innenrohr (10) und zum Außenrohr (8) zusätzliche oder separate Leitmitteln (26a bis 26d) für den Abgasstrom,
f. Einspritzmitteln (24), durch welche Reduktionsmittel in das Innere des Innenrohrs (10) eingespritzt wird,
**dadurch gekennzeichnet, dass**
g. die Leitmittel wenigstens eine am Außenumfang des Innenrohrs (10) angeordnete und in Bezug auf die Umfangsströmung (28) in der Ringkammer (22) der wenigstens einen Öffnung (25a bis 25d) nachgeordnete Leitschaufel (26a bis 26d) beinhalten, die in die Ringkammer (22) derart hinein ragt, dass sie die Umfängsströmung (28) nach radial innen und in die wenigstens eine Öffnung (25a bis 25d) hinein leitet.

2. Mischvorrichtung nach Anspruch 1,
**dadurch gekennzeichnet,**
**dass** in einer Ebene senkrecht zu einer Mittelachse (14) des Außenrohrs (8) oder des Innenrohrs (10) gesehen die wenigstens eine Leitschaufel (26a bis 26d) gegen die Strömungsrichtung der Umfangsströmung (28) geneigt angeordnet ist.

3. Mischvorrichtung nach Anspruch 2,
**dadurch gekennzeichnet,**
**dass** die wenigstens eine Leitschaufel (26a bis 26d) in einem spitzen Winkel in Bezug zu einer an den Außenumfang des Innenrohres angelegten Tangentialebene angeordnet ist.

4. Mischvorrichtung nach einem der vorhergehenden Ansprüche,
**dadurch gekennzeichnet,**
**dass** die wenigstens eine Leitschaufel (26a bis 26d) und das Innenrohr (10) einstückig ausgebildet sind, wobei die Leitschaufel (26a bis 26d) durch einen fahnenartig ausgeschnittenen und in Bezug zum restlichen Innenrohr (10) ausgebogenen Abschnitt der Wandung des Innenrohrs (10) gebildet wird.

5. Mischvorrichtung nach einem der vorhergehenden Ansprüche,
**dadurch gekennzeichnet,**
**dass** am Außenumfang des Innenrohrs (10) mehrere jeweils einer Öffnung (25a bis 25d) im Innenrohr (10) zugeordnete Leitschaufeln (26a bis 26d) vorgesehen sind.

6. Mischvorrichtung nach Anspruch 5,
**dadurch gekennzeichnet,**
**dass** in Richtung der Umfangsströmung (28) in der Ringkammer (22) gesehen die Länge der Leitschaufeln (26a bis 26d) zunimmt.

7. Mischvorrichtung nach einem der vorhergehenden Ansprüche,
**dadurch gekennzeichnet,**
**dass** eine der Abgaseinlassöffnung (4) unmittelbar nachgeordnete Leitschaufel
(26a) vorgesehen ist, welche mit einer der Abgaseinlassöffnung (4) zugewandten Fläche wenigstens einen Teil des über die Abgaseinlassöffnung (4) in die Ringkammer (22) zugeführten Abgasstroms (2) in die in Umfangsrichtung gerichtete Umfangsströmung (28) leitet.

8. Mischvorrichtung nach Anspruch 7,
**dadurch gekennzeichnet,**
**dass** die Leitschaufel (26a) zugleich ausgebildet ist, dass sie mit ihrer von der Abgaseinlassöffnung (4) abgewandten Fläche wenigstens einen Teil der Umfangsströmung (28) in der Ringkammer (22) in eine ihr zugeordnete Öffnung (25d) in der Wandung des Innenrohr (10) leitet.

9. Mischvorrichtung nach einem der vorhergehenden Ansprüche,
**dadurch gekennzeichnet,**
**dass** die wenigstens eine Leitschaufel (26a bis 26d) der zugeordneten Öffnung (25a bis 25d) in der Wandung des Innenrohrs (10) unmittelbar nachgeordnet ist.

10. Mischvorrichtung nach einem der vorhergehenden Ansprüche,
**dadurch gekennzeichnet,**
**dass** das Innenrohr (10) in eine bezogen auf den Querschnitt oder Durchmesser des Innenrohrs (10) mit einem demgegenüber größeren Querschnitt oder Durchmesser versehene weitere Kammer (20) im Gehäuse (8) mündet.

11. Mischvorrichtung nach Anspruch 10,
**dadurch gekennzeichnet,**
**dass** die Ringkammer (22) eine Stirnwand (18) mit wenigstens einer Öffnung aufweist, durch welche ein Teil des In die Ringkammer (22) eingeströmten Abgasstroms (2) in die weitere Kammer (20) strömt, in welcher dieser Teil des Abgasstroms mit dem restlichen, in das Innere des Innenrohrs (10) eingeströmten und mit dem Reduktionsmittel versehenen Teil des Abgasstroms vereinigt wird.

12. Mischvorrichtung nach Anspruch 11,
**dadurch gekennzeichnet,**
**dass** die Stirnwand (18) durch ein kreisförmiges Lochblech gebildet wird.

13. Mischvorrichtung nach einem der Ansprüche 10 bis 12,
**dadurch gekennzeichnet,**
**dass** sich das Innenrohr (10) über die Stirnwand (18) hinaus bis in die weitere Kammer (20) hinein erstreckt.

14. Mischvorrichtung nach einem der vorhergehenden Ansprüche,
**dadurch gekennzeichnet,**
**dass** die Abgaseinlassöffnung (4) als ein in das Außenrohr (8) radial, axial oder tangential einmündender Zuströmstutzen ausgebildet ist.

15. Abgasnachbehandlungsvorrichtung (1) beinhaltend wenigstens einen SCR-Katalysator, welchem in Strömungsrichtung des Abgasstroms (2) gesehen wenigstens eine Mischvorrichtung (6) nach einem der vorhergehenden Ansprüche vorgeordnet ist.

16. Abgasnachbehandlungsvorrichtung nach Anspruch 15,
**dadurch gekennzeichnet,**
**dass** ein Substrat (12) des SCR-Katalysator (12) und die Mischvorrichtung (6) in einem gemeinsamen Gehäuse (8) angeordnet sind.

17. Abgasnachbehandlungsvorrichtung nach Anspruch 16,
**dadurch gekennzeichnet,**
**dass** das gemeinsame Gehäuse (8) durch das Außenrohr der Mischvorrichtung (6) gebildet wird.

18. Abgasnachbehandlungsvorrichtung nach einem der Ansprüche 15 bis 17,
**dadurch gekennzeichnet,**
**dass** dem Substrat (12) des SCR-Katalysators und der Mischvorrichtung (6) ein Zwischenboden (32) mit über dem Querschnitt verteilt angeordneten Öffnungen zwischengeordnet ist.
